(19) Europäisches Patentamt
European Patent Office
Office européen des brevets

(11) **EP 2 491 377 B1**

(12) **EUROPÄISCHE PATENTSCHRIFT**

(45) Veröffentlichungstag und Bekanntmachung des Hinweises auf die Patenterteilung:
**19.04.2017 Patentblatt 2017/16**

(21) Anmeldenummer: **10776605.7**

(22) Anmeldetag: **20.10.2010**

(51) Int Cl.:
*G01N 27/406* (2006.01)    *G01N 27/419* (2006.01)

(86) Internationale Anmeldenummer:
**PCT/EP2010/065760**

(87) Internationale Veröffentlichungsnummer:
**WO 2011/048121 (28.04.2011 Gazette 2011/17)**

(54) **VERFAHREN ZUR ANSTEUERUNG EINES ABGASSENSORS**

METHOD FOR CONTROLING AN EXHAUST GAS SENSOR

MÉTHODE POUR CONTRÔLER UN CAPTEUR DE GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.10.2009 DE 102009050224**

(43) Veröffentlichungstag der Anmeldung:
**29.08.2012 Patentblatt 2012/35**

(73) Patentinhaber: **Continental Automotive GmbH 30165 Hannover (DE)**

(72) Erfinder:
• **BARNIKOW, Stefan 81373 München (DE)**
• **WAGNER, Ekkehart-Peter 93077 Bad Abbach (DE)**

(56) Entgegenhaltungen:
EP-A2- 0 816 835       WO-A1-2009/135862
DE-A1- 19 836 128      DE-C1- 10 244 466
US-A- 4 609 452        US-A- 4 990 235

**Beschreibung**

Die Erfindung betrifft ein Verfahren zur Ansteuerung eines Abgassensors, der entweder als Grenzstromsonde oder als Zwei-Zellen-Sonde ausgebildet ist, welche jeweils eine Referenzkavität aus einem keramischen Material und eine Zelle aus einem Sauerstoffionen leitenden Material umfassen.

Beim Betrieb von Verbrennungskraftmaschinen werden für die Einhaltung von gesetzlich festgelegten Emissionsgrenzwerten Abgassensoren eingesetzt, deren Signal zur Emissionsregelung der Verbrennungskraftmaschinen verwendet wird. Häufig eingesetzte Abgassensoren sind sog. binäre und lineare Lambdasonden sowie NOx-Sensoren. Diese Typen von Abgassensoren umfassen jeweils einen beheizten Festkörperelektrolyten aus Yttrium-stabilisierter Zirkondioxidkeramik ($ZrO_2$). Um bei Abgassensoren, die aus Zirkondioxid bestehen, die Sauerstoff- oder NOx-Konzentration in Form eines Sauerstoffionenstroms durch den Festkörperelektrolyten messen zu können, ist eine Beheizung der Keramik vorgesehen. Die Zieltemperatur wird entweder auf einen vorgegebenen Wert geregelt oder betriebspunktabhängig vorgesteuert.

Das Basismaterial Zirkondioxid hat zwei wesentliche Eigenschaften:

1. Wenn an einer Elektrode des Abgassensors eine Sauerstoffkonzentration von Lambda = 1 und an einer anderen Elektrode des Abgassensors eine Sauerstoffkonzentration von Lambda = unendlich (gleichbedeutend mit Umgebungsluft) anliegt, so stellt sich zwischen den beiden Elektroden eine elektrische Spannung von 450 mV ein. Diese Spannung wird als Nernst-Spannung bezeichnet, welche nach dem Physiker Walther Nernst benannt ist.

2. Wenn durch das Zirkondioxid des Abgassensors ein elektrischer Strom geführt wird, werden durch das Zirkondioxid Sauerstoffteilchen transportiert.

Eine weit verbreitete Ausführung von linearen Abgassensoren besteht aus einer Anordnung von zwei miteinander verbundenen Zellen des Grundmaterials Zirkondioxid. In der einen Zelle, der sog. Nernst-Zelle, wird hierbei die oben unter 1. genannte Eigenschaft ausgenutzt. In der anderen, zweiten Zelle, welche als Pump-Zelle bezeichnet wird, wird die oben unter 2. genannte Eigenschaft ausgenutzt. Bei einem solchen linearen Abgassensor befindet sich zwischen den beiden Zellen eine mit dem Abgasstrom durch eine Diffusionsbarriere verbundene Referenzkavität (die sog. Reference Cavity), in der sich eine Sauerstoffkonzentration von Lambda = 1 einstellen soll. Solange die Sauerstoffkonzentration den Wert Lambda = 1 aufweist, kann zwischen den Elektroden der Nernst-Zelle eine elektrische Spannung von 450 mV gemessen werden. Sobald jedoch, verursacht durch eine Abweichung von der idealen Sauerstoffkonzentration Lambda = 1 im Abgas, durch die Diffusionsbarriere Sauerstoffteilchen zu- oder abfließen, wird in der abgeschlossenen Zelle die Sauerstoffkonzentration beeinflusst. Hierdurch weicht die elektrische Spannung zwischen den Elektroden der Nernst-Zelle von den zu erzielenden 450 mV ab.

Eine mit dem Abgassensor verbundene Regelelektronik oder Ansteuervorrichtung hat die Aufgabe, den von den 450 mV abweichenden Spannungswert über der Nernst-Zelle zu messen und eine geeignete Gegenreaktion einzuleiten, um die Spannung von 450 mV wieder zu erzielen. Die Gegenreaktion besteht darin, durch die Pumpzelle des Abgassensors einen elektrischen Strom zu schicken. Hierdurch werden so viele Sauerstoffteilchen in die Referenzkavität transportiert, dass die Sauerstoffkonzentration wieder zu Lambda = 1 ausgeglichen wird. Der Stromfluss kann hierbei in beide Richtungen erfolgen, da auch die Sauerstoffkonzentration im Abgas sowohl größer als auch kleiner als Lambda = 1 sein kann.

Regelungstechnisch stellt der Abgassensor somit eine Regelstrecke dar, die durch die angeschlossene Ansteuervorrichtung im Arbeitspunkt gehalten werden muss. Abgassensor und Ansteuervorrichtung bilden damit einen Regelkreis aus, in dem die Ansteuervorrichtung einen Regler darstellt oder umfasst.

Eine andere, verbreitete Ausführung von linearen Abgassensoren umfasst neben der Referenzkavität nur eine Zelle des Grundmaterials Zirkondioxid. Diese werden als Grenzstromsonden bezeichnet. An die einzige Zelle wird typischerweise eine variable Spannung angelegt. Der Stromfluss durch diese Zelle hängt im Wesentlichen von der Höhe der angelegten Spannung sowie der Sauerstoffkonzentration in dem durch eine Diffusionsbarriere getrennten Abgastrakt ab. Die Charakteristik des Stroms ist dabei derart, dass der Strom in einem Spannungsbereich um 450 mV relativ konstant bleibt, während er sich bei erheblichen Abweichungen von 450 mV stark ändert. Die Höhe des Stroms in diesem "Plateaubereich" ist abhängig von Gasdiffusionsraten in die Referenzkavität, die wiederum von den Gaskonzentrationen im Abgas abhängen, und kann daher als Maß für die Sauerstoffkonzentration im Abgas verwendet werden.

Die unterschiedliche Ansteuerung der beiden genannten Abgassensortypen macht eine jeweils spezifische Ansteuervorrichtung notwendig. Da die Ansteuervorrichtungen häufig in spezifischen, integrierten Schaltkreisen monolithisch integriert werden, ist die Bereitstellung der Ansteuervorrichtung mit einem hohen organisatorischen und monetären Aufwand verbunden.

Die DE 198 36 128 A1 offenbart eine Ansteuer- und Auswertevorrichtung für einen Abgassensor, bei dem ein von einem Mikrocontroller ausgegebenes PWM-Signal mit Hilfe einer analogen Beschaltung in einen Pumpstrom für eine zu steuernde Pumpzelle einer nach dem Prinzip der galvanischen Sauerstoffkonzentrationszelle mit Festelektrolyt arbeitenden Abgassonde umgewandelt wird. Der Pumpstrom-Istwert wird aus der an einem Messwiderstand abfallenden Spannung ermittelt, der Pumpstrom-Sollwert wird aus der Spannungsdifferenz zwischen dem Istwert der Nernstspannung in der entsprechenden Meßzelle und einem vorgegebenen Sollwert bestimmt.

Die EP 0 816 835 A2 und die US 4,990,235 A offenbaren eine Ansteuer- und Auswertevorrichtung für einen Abgassensor bei dem der Messspannungsfehler aufgrund des Spannungsabfalls an dessen Innenwiderstand mittels eines konstanten Widerstandes am Eingang des Messverstärkers kompensiert werden soll. Allerdings neigt diese Anordnung zum Schwingen.

Die DE 102 44 466 C1 offenbart eine Ansteuer- und Auswertevorrichtung für einen Abgassensor, bei der in der Aufheizphase eine Spannungskorrektur vorgenommen wird, um eine Beschädigung des Festkörperelektrolyten zu vermeiden.

Die US 4,406,452 A offenbart eine Ansteuer- und Auswertevorrichtung für einen Abgassensor, bei der der aktuelle Pumpstrom und die mittels des gemessenen Innenwiderstands ermittelte Temperatur zur Korrektur des Pumpstromes verwendet werden.

Es ist daher Aufgabe der vorliegenden Erfindung, eine Vorrichtung sowie ein Verfahren zur Ansteuerung eines Abgassensors anzugeben, welche einen wahlweisen Betrieb des einen oder des anderen Abgassensors ermöglichen. Insbesondere soll der wahlweise Betrieb ohne zusätzliche Hardware-Komponenten ermöglicht werden, um eine hohe Flexibilität zu erzielen.

Diese Aufgaben werden gelöst durch eine Vorrichtung gemäß den Merkmalen des Patentanspruchs 1 sowie ein Verfahren gemäß den Merkmalen des Patentanspruchs 7. Vorteilhafte Ausgestaltungen ergeben sich jeweils aus den abhängigen Patentansprüchen.

Die Erfindung schafft ein Verfahren zur Ansteuerung einer Grenzstromsonde mittels einer einen Regler aufweisenden Ansteuervorrichtung, wobei die Grenzstromsonde eine Zelle aus einem Sauerstoffionen leitenden Material umfasst, bei dem durch den Regler der Vorrichtung in die Zelle ein Strom eingeprägt wird, der abhängig von einer an der Zelle gemessenen Spannung geregelt wird, wobei die gemessene Spannung um die am Innenwiderstand der Zelle aufgrund des eingeprägten Stroms abfallende Spannung korrigiert wird.

Das erfindungsgemäße Verfahren ermöglicht es, verschiedene Typen von Abgassensoren mit einer einzigen Ansteuervorrichtung zu betreiben, welches im Wesentlichen auf dem Konzept der Zwei-Zellen-Sonde basiert. Der der Erfindung zu Grunde liegende Gedanke besteht darin, sowohl eine Grenzstromsonde als auch die Zwei-Zellen-Sonde in einer Regelschleife zu betreiben. Analog zur Zwei-Zellen-Sonde soll in erfindungsgemäßer Weise bei der Grenzstromsonde die Spannung über der Zelle gemessen und in Abhängigkeit der gemessenen Spannung ein Strom in diese Zelle eingeprägt werden. Um Verfälschungen der gemessenen Spannung durch den Innenwiderstand der Grenzstromsonde zu vermeiden, wird die durch den eingeprägten Strom am Innenwiderstand abfallende Spannung als Eingangsgröße des Regelkreises berücksichtigt.

Ein Vorteil dieser Vorgehensweise liegt in der Gewinnung einer hohen Flexibilität beim Einsatz von Abgassensoren, insbesondere von Lambda-Sonden. Im Gegensatz zur bisherigen Festlegung auf einen bestimmten Typ von Lambda-Sonden bei der Definition und Implementierung der notwendigen Ansteuervorrichtung, ermöglicht die Erfindung eine wahlweise, weil ähnliche Ansteuerung für die Grenzstromsonde und die Zwei-Zellen-Sonde. Eine derartige Vorrichtung ist somit in der Lage, verschiedene Typen von Abgassensoren zu betreiben. Im Gegensatz zu bisher realisierten, aufwändigen Ansteuerungen von Grenzstromsonden, bei denen eine variable Spannung an die Referenzkavität angelegt und ein resultierender Strom gemessen wird, ermöglicht die Erfindung eine Vereinheitlichung der Ansteuerung von Linearsonden unterschiedlichen Aufbaus.

Gemäß einer zweckmäßigen Ausgestaltung umfasst die Vorrichtung einen Umschalter, wodurch anstelle der Grenzstromsonde eine Zwei-Zellensonde angesteuert wird, wobei dem Regler zur Ansteuerung der Zwei-Zellen-Sonde eine gemessene Nernst-Zellenspannung zugeführt wird.

In einer Ausführung der Erfindung ist die Eingangsgröße des Reglers zur Ansteuerung der Grenzstromsonde oder der Zwei-Zellen-Sonde eine rechnerisch ermittelte Nernst-Zellenspannung. Korrespondierend hierzu wird als Eingangsgröße des Reglers zur Ansteuerung der Grenzstromsonde oder der Zwei-Zellen-Sonde die rechnerisch ermittelte Nernst-Zellenspannung verarbeitet.

Eine weitere Ausgestaltung sieht vor, bei dem erfindungsgemäßen Verfahren die gemessene Sensorspannung oder die Referenzspannung vor der Weiterverarbeitung zur Ermittlung der Ausgangsgröße um den Spannungsabfall am Innenwiderstand der Grenzstromsonde aufgrund des eingeprägten Stromes korrigiert. Hierdurch können Verfälschungen der gemessenen Spannung durch den Innenwiderstand der Grenzstromsonde vermieden werden. Der durch den Innenwiderstand verursachte Spannungsabfall an der Sonde lässt sich aus dem Produkt des Innenwiderstands und einer Funktion der Regelausgangsgröße, d.h. dem in die abgeschlossene Zelle einzuprägenden Strom, ermitteln. Dies kann z.B der Stromwert selber, aber auch eine Tiefpassfilterung des Stromwertes sein. Wahlweise kann diese Korrektur bei einer der beiden Eingangsgrößen berücksichtigt werden. Da der Strom durch die Sonde direkt den "Plateaustrom" in der Charakteristik des Abgassensors darstellt, kann dieser direkt als Maß für den Lambda-Wert im Abgasstrang verarbeitet werden.

Gemäß einer weiteren Ausgestaltung wird bei dem erfindungsgemäßen Verfahren aus der korrigierten Sensorspannung der als Ausgangsgröße zu verwendende Strom ermittelt.

Bei dem erfindungsgemäßen Verfahren wird die Ausgangsgröße des Regelkreises zur Ansteuerung der Grenzstromsonde als Maß für den Lambda-Wert verarbeitet.

Die Erfindung wird nachfolgend näher anhand eines Ausführungsbeispiels erläutert. Es zeigen:

Fig. 1 eine schematische Darstellung einer Vorrichtung zur Ansteuerung eines Abgassensors, der entweder als Grenzstromsonde oder als Zwei-Zellen-Sonde ausgebildet ist, und

Fig. 2 die Strom-Spannungs-Charakteristik einer Grenzstromsonde.

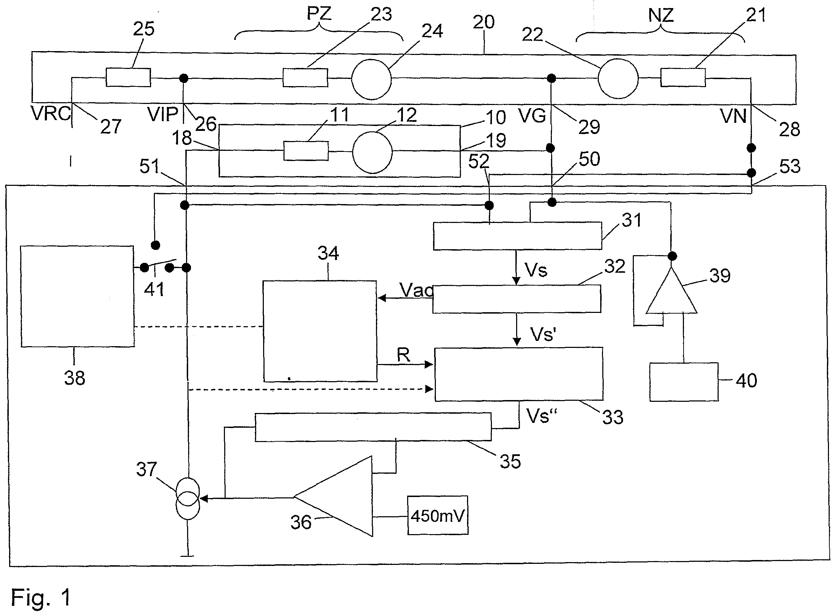

Fig. 1 zeigte eine schematische Darstellung einer Ansteuervorrichtung 30, welche wahlweise zur Ansteuerung einer Grenzstromsonde 10 oder einer Zwei-Zellen-Sonde 20 verwendet werden kann. Die Grenzstromsonde 10 sowie die Zwei-Zellen-Sonde 20 sind jeweils als elektrisches Ersatzschaltbild dargestellt.

Die Grenzstromsonde 10 (auch Ein-Zellen-Sonde genannt) ist - für den Fachmann bekannt - durch einen Innenwiderstand 11 und eine Spannungsquelle 12 repräsentiert. Die beiden Elemente sind seriell zwischen Anschlüssen 18, 19 der Grenzstromsonde 10 verschaltet. Die Grenzstromsonde 10 besteht - für den Fachmann ebenfalls bekannt - aus nur einer Zelle des Grundmaterials Zirkondioxid, an die üblicherweise eine variable Spannung angelegt wird, wobei der Stromfluss durch die Einzelzelle von der Höhe der angelegten Spannung sowie der Sauerstoffkonzentration in dem durch eine Diffusionsbarriere getrennten Abgastrakt abhängt. Die Charakteristik des Stroms ist dabei derart, dass der Strom in einem Spannungsbereich um 450 mV relativ konstant bleibt, während er sich bei Abweichungen von 450 mV stark ändert. Die Höhe des Stroms in diesem Plateaubereich ist abhängig von Gasdiffusionsraten in die Referenzkavität, die wiederum von den Gaskonzentrationen im Abgas abhängen, und kann daher als Maß für die Sauerstoffkonzentration im Abgas verwendet werden.

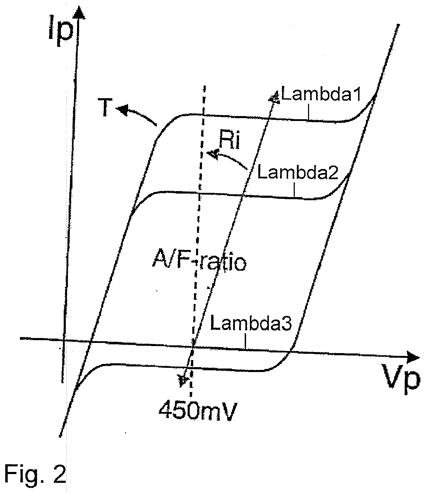

Dieser Zusammenhang ist schematisch in Fig. 2 dargestellt, welche in einem Strom-Spannungs-Diagramm eine Schar von Kurven für unterschiedliche Lambda-Werte (A/F-ratio) dargestellt. Auf der Abszisse ist hierbei die über die Grenzstromsonde abfallende Spannung Vp aufgetragen. Auf der Ordinate ist der durch die Grenzstromsonde fließende oder eingeprägte Strom Ip aufgetragen. Wie dieser Darstellung ohne Weiteres zu entnehmen ist, verlaufen die Strom-Spannungs-Kennlinien außerhalb des Plateaubereichs rampenförmig, wobei die Steigung abhängig vom Innenwiderstand Ri und damit indirekt von der Temperatur der abgeschlossenen Zelle der Grenzstromsonde 10 ist. Die Höhe der Plateaus der unterschiedlichen Kurvenscharen ist von der Sauerstoffkonzentration im Abgasstrang abhängig, wobei in Fig. 2 beispielhaft drei Kurven dargestellt sind, welche entsprechend ihrer unterschiedlichen Lambdawerte mit Lambda1, Lambda2 und Lambda3 gekennzeichnet sind. Je nach Innenwiderstand des Sensorelementes und Lambdawert des die Sonde umströmenden Abgases liegt ein zu erzielender Spannungswert von 450 mV in der Mitte des Plateaubereichs (vgl. Lambda3) oder am Rand (vgl. Lambda1). Wünschenswert ist jedoch, unabhängig von Temperatur und Lambdawert, dass der zu erzielende Spannungswert in der Mitte des Plateaubereichs liegt.

Die Zwei-Zellen-Sonde 20 besteht aus einer Anordnung von zwei miteinander verbundenen Zellen des Grundmaterials Zirkondioxid, der sog. Nernst-Zelle NZ sowie der Pump-Zelle PZ. Die Nernst-Zelle NZ ist durch einen Innenwiderstand 21 und eine Spannungsquelle 22 gebildet, welche seriell zwischen Anschlüssen 28, 29 der Zwei-Zellen-Sonde verschaltet sind. In entsprechender Weise ist die Pump-Zelle PZ ebenfalls durch einen Innenwiderstand 23 sowie eine Spannungsquelle 24 gebildet. Diese beiden Elemente sind ebenfalls seriell miteinander verschaltet, wobei die Serienschaltung zwischen dem Anschluss 29 und einem weiteren Anschluss 26 der Zwei-Zellen-Sonde 20 angeordnet sind. Zwischen dem Anschluss 26 und einem weiteren Anschluss 27 ist ein Widerstand 25, welcher einen Kalibrierwiderstand ausbildet, angeordnet.

Zwischen der Nernst-Zelle NZ und der Pump-Zelle PZ befindet sich eine mit dem Abgasstrom durch eine Diffusionsbarriere verbundene Referenzkavität, die sog. Reference Cavity. In dieser soll sich eine Sauerstoffkonzentration von Lambda = 1 befinden, wobei dann das Kraftstoffgemisch optimal verbrannt ist. Solange Lambda = 1 ist, wird zwischen den Elektroden der Nernst-Zelle bekanntermaßen eine elektrische Spannung von 450 mV gemessen. Sobald jedoch, verursacht durch eine Abweichung von der idealen Sauerstoffkonzentration Lambda = 1, im Abgas durch die Diffusionsbarriere Sauerstoffteilchen zu- oder abfließen, wird in dieser abgeschlossenen Zelle die Sauerstoffkonzentration beeinflusst. Hierdurch weicht auch die elektrische Spannung zwischen den Elektroden (angeschlossen an die Anschlüsse 28, 29) der Nernst-Zelle von 450 mV ab.

Bei der Ansteuerung der Zwei-Zellen-Sonde 20 durch die Ansteuervorrichtung 30 besteht das Ziel nun darin, eine Spannungsabweichung über der Nernst-Zelle von den idealen 450 mV zu messen und eine geeignete Gegenreaktion einzuleiten. Diese besteht darin, in die Pump-Zelle PZ einen elektrischen Strom Ip einzuprägen, durch den so viele Sauerstoffteilchen in die Referenzkavität geschickt werden, so dass die Sauerstoffkonzentration wieder zu Lambda = 1 ausgeglichen wird. Der Stromfluss kann hierbei in beide Richtungen erfolgen, da die Sauerstoffkonzentration im Abgas sowohl größer als auch kleiner als Lambda = 1 sein kann. Der Zwei-Zellen-Sensor 20 stellt damit eine Regelstrecke dar, die durch die angeschlossene Ansteuervorrichtung (die die Funktion eines Reglers hat) im Arbeitspunkt gehalten werden muss. Die Reglereingangsgröße ist bei der Zwei-Zellen-Sonde 20 die Nernst-Spannung in Höhe von 450 mV, während die Reglerausgangsgröße der Pump-Strom Ip durch die Pump-Zelle PZ ist. Durch dynamisch richtige Erhöhung oder Verringerung des Pump-Stroms soll die Nernst-Spannung dabei auf einen Wert von 450 mV gehalten werden.

Die erfindungsgemäße Ansteuervorrichtung 30 ist dazu ausgebildet, auch die Grenzstromsonde in einer solchen Regelschleife zu betreiben. Analog zur Zwei-Zellen-Sonde 20 wird die Spannung über der Grenzstromsonde 10, d.h. den Anschlüssen 18, 19, gemessen und in Abhängigkeit der gemessenen Spannung ein Strom in die Grenzstromzelle eingeprägt. Um Verfälschungen der gemessenen Spannung durch den Innenwiderstand der Ein-Zellen-Sonde zu vermeiden, wird die gemessene Spannung vor der Weiterverarbeitung um den Spannungsabfall über den Innenwiderstand korrigiert:

$$Vs' = Vs - \left( Ri * f(Ip) \right) \qquad (1)$$

Die Reglerzielgröße bleibt in diesem Fall eine feste Größe Alternativ kann auch die gemessene Spannung über der Grenzstromsonde unverändert als Reglereingangsgröße verwendet werden. In diesem Fall ist dann jedoch als Regelzielgröße eine "künstlich berechnete" Nernst-Spannung Vs* zu verwenden, welche aus der Messung der gesamten Zellenspannung nach folgender Berechnungsregel gewonnen wird:

$$Vs* = 450mV + \left( Ri * f(Ip) \right) \qquad (2)$$

Hierbei ist der in den Grenzstromsensor einzuprägende Strom Ip die Reglerausgangsgröße. Da dieser Strom direkt den Plateaustrom in der Charakteristik des Grenzstromsensors darstellt, stellt er ein Maß für den Lambda-Wert im Abgas dar.

Im Gegensatz zur bisher üblichen Ansteuerung der Ein-Zellen-Sonde mit Hilfe einer variierbaren Spannung und Messung des Stroms liegt der Vorteil des Vorgehens darin, dass das Regelungsprinzip ähnlich ist zum Regelungskonzept des Zwei-Zellen-Sensors. Lediglich die Zielspannung des Reglers muss um das Produkt aus einer Funktion des Sondenstroms und der Impedanz des Grenzstromsensors korrigiert werden, um einen präzisen Strom- und damit Lambda-Wert messen zu können.

Fig. 1 zeigt in einer schematischen Darstellung die in der Ansteuervorrichtung 30 notwendigen Komponenten, um auch eine Grenzstromsonde in einer Regelschleife zu betreiben. Die Ansteuervorrichtung 30 kann als integrierter Chip oder ASIC (Application Specific Integrated Circuit) ausgebildet sein.

Die Eingänge eines Eingangsverstärkers 31, der vorzugsweise als Analog-Digital-Converter ausgebildet ist, sind mit Anschlüssen 51, 52 sowie 50 verbunden. Die Anschlüsse 51, 52 können hierbei, entgegen der zeichnerischen Darstellung, auch durch einen gemeinsamen Anschluss ausgebildet sein. Mit den Anschlüssen 50 sowie 51, 52 sind die Anschlüsse 18, 19 der Grenzstromsonde 10 bzw. die Anschlüsse 28, 29 der Zwei-Zellen-Sonde 20 gekoppelt. Mit 38 ist eine Wechselstromquelle für eine Impedanzmessung gekennzeichnet. Diese kann über einen Umschalter 41 wahlweise die Grenzstromsonde 10 oder die Zwei-Zellen-Sonde 20 mit einem Wechselstromsignal über einen Anschluss 53 beaufschlagen. Der Anschluss 53 ist mit dem Anschluss 28 der Zwei-Zellen-Sonde 20 oder aber über den Anschluss 51 mit dem Anschluss 18 der Grenzstromsonde 10 verbunden. Der Anschluss des Eingangsverstärkers 31, der mit dem Anschluss 50 gekoppelt ist, ist ferner mit einem rückgekoppelten Komperator 39 verbunden, dessen anderer Eingang mit einer virtuellen Masse 40 verbunden ist. Die virtuelle Masse stellt ein Bezugspotential für die Ansteuervorrichtung 30 bereit, welches zwischen 0 und 5 V beträgt. Am Ausgang des Eingangsverstärkers 31 liegt eine Spannung Vs an, welche der Zellenspannung entweder der Grenzstromsonde 10 oder der Nernst-Zelle NZ der Zwei-Zellen-Sonde 20 entspricht.

Vs kann zusätzlich ein aufgrund einer permanent periodisch durchgeführten Impedanzmessung mit Wechselspannungsanteilen versehenes Mischsignal sein (auch andere Ausführungen sind denkbar). Die Wechselspannungsanteile sind beispielsweise durch eine Impedanzmessung der Zwei-Zellen-Sonde 20 oder der Ein-Zellen-Sonde 10 hervorgerufen, durch welche eine Temperaturmessung erfolgt. Dem Eingangsverstärker 31 kann deshalb auch eine Schaltungsanordnung 32 zur Signaltrennung von Vs in einen Gleichspannungs- und einen Wechselspannungsanteil nachgeschaltet sein. Ein Gleichspannungsanteil Vs' wird einer Kompensationsanordnung 33 zugeführt. Ein Wechselspannungsanteil Vac wird einer Vorrichtung 34 zur Impedanzmessung zugeführt, welche der Kompensationsanordnung 33 einen Innenwiderstandswert R zur Verfügung stellt.

Die Kompensationsanordnung 33 ist dazu ausgebildet, aus den Eingangsgrößen eine künstlich berechnete Nernst-Spannung Vs" zu ermitteln, welche die gemessene Spannung vor der Weiterverarbeitung um den Spannungsabfall über den Innenwiderstand korrigiert. Dies erfolgt gemäß Gleichung (1). Vs" wird einem Regler 35, z.B. einem PID-Regler, zugeführt. Dieser ist in bekannter Weise mit einem Komparator 36 gekoppelt, an dessen Referenzeingang der Spannungssollwert (z.B. in Höhe von 450 mV) als Bezugsgröße anliegt. Ausgangsseitig sind der Komparator 36 sowie der Regler 35 mit einer steuerbaren Stromquelle 37 (oder einem Digital-Analog-Umsetzer auf Strombasis) verbunden, welche - je nach angeschlossenem Abgassensor 10 oder 20 - einen Strom in die jeweilige angeschlossene Zelle einprägt, um Vs" an den Spannungssollwert anzugleichen.

**Patentansprüche**

**1.** Verfahren zur Ansteuerung einer Grenzstromsonde (10) mittels einer einen Regler (36) aufweisenden Ansteuervorrichtung, wobei die Grenzstromsonde (10) eine Zelle aus einem Sauerstoffionen leitenden Material umfasst, bei dem durch den Regler (36) in die Zelle ein Strom (Ip) eingeprägt wird, der abhängig von einer an der Zelle gemessenen Spannung (Vs) geregelt wird, **dadurch gekennzeichnet, dass** die gemessene Spannung (Vs) um die am Innenwiderstand der Zelle aufgrund des eingeprägten Stroms (Ip) abfallende Spannung korrigiert wird.

2. Verfahren nach Anspruch 1, bei dem durch die Vorrichtung, die einen Umschalter (41) umfasst, anstelle der Grenzstromsonde (10) eine Zwei-Zellensonde (20) angesteuert wird, wobei dem Regler (36) zur Ansteuerung der Zwei-Zellen-Sonde (20) eine gemessene Nernst-Zellenspannung zugeführt wird.

3. Verfahren nach Anspruch 1 oder 2, bei dem dem Regler (36) zur Ansteuerung der Grenzstromsonde (10) oder der Zwei-Zellen-Sonde (20) eine rechnerisch ermittelte Nernst-Zellenspannung zugeführt wird.

4. Verfahren nach einem der Ansprüche 1 bis 3, bei dem eine dem Regler (36) zugeführte Referenzspannung vor der Weiterverarbeitung zur Ermittlung des einzuprägenden Stroms um einen Innenwiderstand der Grenzstromsonde (10) korrigiert wird.

5. Verfahren nach Anspruch 4, bei dem aus der Abweichung der gemessenen Sensorspannung (Vs) von der korrigierten Referenzspannung der einzuprägende Strom (Ip) ermittelt wird.

6. Verfahren nach einem der Ansprüche 1 bis 3, bei dem aus der Abweichung der korrigierten Spannung (Vs') von einer Referenzspannung der einzuprägende Strom (Ip) ermittelt wird.

7. Verfahren nach einem der Ansprüche 1 bis 6, bei dem der in die Grenzstromsonde (10) eingeprägte Strom als Maß für den Lambdawert verarbeitet wird.

## Claims

1. Method for controlling a limiting current probe (10) by means of a control device having a controller (36), wherein the limiting current probe (10) comprises a cell made of a material which conducts oxygen ions, in which a current (Ip), which is controlled as a function of a voltage (Vs) measured at the cell, is impressed into the cell by the controller (36), **characterized in that** the measured voltage (Vs) is corrected by an amount equal to the voltage dropping across the internal resistance of the cell owing to the impressed current (Ip).

2. Method according to Claim 1, in which, instead of the limiting-current probe (10), a two-cell probe (20) is actuated by the device which comprises a changeover switch (41), wherein a measured Nernst cell voltage is fed to the controller (36) for controlling the two cell probe (20).

3. Method according to Claim 1 or 2, in which a computationally determined Nernst cell voltage is fed to the controller (36) for controlling the limiting current probe (10) or the two cell probe (20).

4. Method according to one of Claims 1 to 3, in which a reference voltage which is fed to the controller (36) is corrected by an internal resistance of the limiting current probe (10) before the further processing, in order to determine the current which is to be impressed.

5. Method according to Claim 4, in which the current (Ip) which is to be impressed is determined from the deviation of the measured sensor voltage (Vs) from the corrected reference voltage.

6. Method according to one of Claims 1 to 3, in which the current (Ip) which is to be impressed is determined from the deviation of the corrected voltage (Vs') from a reference voltage.

7. Method according to one of Claims 1 to 6, in which the current impressed into the limiting current probe (10) is processed as a measure of the lambda value.

## Revendications

1. Procédé de commande d'une sonde de courant limite (10) au moyen d'un dispositif de commande comportant un régulateur (36), dans lequel la sonde de courant limite (10) comprend une cellule constituée d'un matériau conducteur d'ions oxygène, dans lequel un courant (Ip) est injecté dans la cellule par un régulateur (36), lequel courant est régulé en fonction d'une tension (Vs) mesurée sur la cellule, **caractérisé en ce que** la tension mesurée (Vs) est corrigée pour tenir compte de la chute de tension sur la résistance interne du fait du courant injecté (Ip).

2. Procédé selon la revendication 1, dans lequel une sonde à deux cellules (20) est commandée par le dispositif, qui comprend un commutateur (41), au lieu de la sonde de courant limite (10), dans lequel une tension de cellule de Nernst mesurée est délivrée au régulateur (36) pour commander la sonde à deux cellules (20).

3. Procédé selon la revendication 1 ou 2, dans lequel une tension de cellule de Nernst déterminée par calcul est délivrée au régulateur (36) pour commander la sonde de courant limite (10) ou la sonde à deux cellules (20).

4. Procédé selon l'une quelconque des revendications 1 à 3, dans lequel une tension de référence délivrée au régulateur (36) est corrigée pour tenir compte d'une résistance interne de la sonde de courant limite (10) avant un traitement ultérieur pour obtenir le courant à injecter.

5. Procédé selon la revendication 4, dans lequel le courant (Ip) à injecter est déterminé à partir de l'écart entre la tension de capteur (Vs) mesurée et la tension de référence corrigée.

6. Procédé selon l'une quelconque des revendications 1 à 3, dans lequel le courant (Ip) à injecter est déterminé à partir de l'écart entre la tension corrigée (Vs') et une tension de référence.

7. Procédé selon l'une quelconque des revendications 1 à 6, dans lequel le courant injecté dans la sonde de courant limite (10) est traité en tant mesure de la valeur lambda.

Fig. 1

EP 2 491 377 B1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19836128 A1
- EP 0816835 A2
- US 4990235 A
- DE 10244466 C1
- US 4406452 A